# EUROPEAN PATENT APPLICATION

(11) **EP 3 657 159 A1**
(43) Date of publication of application: **27.05.2020**
(21) Application number: 18207378.3
(22) Date of filing: 20.11.2018
(51) Int. Cl.: G01N 23/20025

(54) **SAMPLE HOLDER FOR PERFORMING X-RAY ANALYSIS ON A CRYSTALLINE SAMPLE, AND SAMPLE HOLDER HANDLING SYSTEM**

(71) Applicant: Merck Patent GmbH, 64293 Darmstadt (DE)
(72) Inventor: GAJEWSKI, Jan, 64293 Darmstadt (DE); KUEHN, Clemens, 64293 Darmstadt (DE); KHUTIA, Anupam, 64293 Darmstadt (DE); MUSIL, Djordje, 64293 Darmstadt (DE); TROUBNIAKOV, Slawa, 64293 Darmstadt (DE); VON ESSEN, Carolina, 64293 Darmstadt (DE)
(74) Representative: Merck Serono S.A. Intellectual Property

(57) **Abstract**

A sample holder (3) for performing X-ray analysis on a crystalline sample (11) comprises a mounting support with a first end that can be attached to a goniometer head, whereby the crystalline sample (11) can be attached to the mounting support at a distance to the first end. The sample holder (3) further comprises a holder base at the first end of the mounting support with means for mounting the holder base to the goniometer head, whereby the holder base is configured to fit into a well (2) of a well plate (1). The holder base comprises a ferromagnetic material for mounting the holder base to a magnetic base element at or within the goniometer head. The mounting support comprises a tube preferably made of glass into which the crystalline sample (11) can be inserted. The sample holder (3) can also comprise a base disk (14) that provides for a lid for a well (2) of the well plate (1) after insertion of the sample holder (3) into the well (2). The holder base can also comprise a holder ring (7) that is arranged at the first end of the mounting support and that surrounds the mounting support in a circumferential manner. The base disk (14) can be removably attachable to the holder ring (7). A crystalline sponge is attached to the mounting support.

## Description

### Technical Field

The present invention relates to a sample holder for performing X-ray analysis on a crystalline sample, whereby the sample holder comprises a mounting support with a first end that can be attached to a goniometer head and whereby the crystalline sample can be attached to the mounting support at a distance to the first end.

### Background

X-ray crystallography is a well-known technique for determining the atomic and molecular structure of a crystal, in which the crystalline atoms cause a beam of incident X-rays to diffract into many specific directions. By measuring the angles and intensities of these diffracted beams, a three-dimensional picture of the density of electrons within the crystal can be obtained. Based on this electron density, other characteristic features of the crystalline structure like e.g. the mean positions of the atoms in the crystal can be determined, as well as their chemical bonds, their disorder, and various other information.

In a single-crystal X-ray diffraction measurement (sc-XRD), a crystal is mounted on a goniometer. The goniometer is used to position the crystal at selected orientations. For each of the different orientations an illumination of the crystal with a finely focused monochromatic beam of X-rays is performed, producing a diffraction pattern of regularly spaced spots known as reflections. The two-dimensional images taken at different orientations are converted into a three-dimensional model of the density of electrons within the crystal using the mathematical method of Fourier transforms, combined with chemical data known for the sample.

Other techniques like e.g. infrared spectroscopy, nuclear magnetic resonance or mass spectrometry can provide indirect information, the interpretation of which usually requires a high level of expertise and experience of trained personnel. Mostly the structure of a species cannot be determined by application of one technique but requires the combination of different analytical experiments rendering the process time consuming and expensive.

However, sc-XRD requires a single crystal of at least a certain size, quality and shape to give high enough diffraction intensity. In many cases this crystal has to be grown using technics like slow cooling or gas phase diffusion. The crystal has to be mounted and aligned on a goniometer to be rotated in different orientations within a highly focused X-ray beam. Measurements typically last between hours and several days depending on the size and quality of the crystal. Due to the intense X-ray illumination, measurements are mostly carried out at a low temperature, e.g. by using a liquid nitrogen cooling system to prevent damage to the crystal during measurement.

Current procedures for single crystal X-ray structure determination therefore require a series of preparation steps for handling the crystalline sample before and during measurements, which mostly have to be executed manually. In the current state of art, a suitable crystal is selected manually from a number of crystals under a microscope or binocular. The selected crystal is fixed to the tip of a suitable sample holder, usually by using a small amount of oil. The oil serving as both, a protectant during the long measurement times, as well as a glue fixing the crystal in a certain position during X-ray measurement at low temperatures. Alternative procedures for preparation feature gluing the crystal on top of a fiber of amorphous material or within a tube with a small diameter, typically made of amorphous material like glass or polyimide. Such tubes are typically closed after insertion of the crystalline sample to seal the sample.

Subsequently the sample holder is placed on the X-ray goniometer, e.g. by manually fixing the sample holder on a brass pin or magnetic goniometer head.

Also known is the use of crystalline sponges for facilitated structure elucidation of small molecules. A crystalline sponge is built up from a porous complex which is characterized by wide pores of typical dimensions in the range of several Angstroms, e.g. with diameters of 1 nm to 0.1 nm. An analyte can soak into the pores where it aligns with the crystalline sponge structure and is oriented uniformly. This soaked crystalline sponge can then be treated like a single crystal of a small molecule and in many cases structure analysis by X-ray diffraction is possible. Such a crystalline sponge is described in further detail e.g. in WO 2014/038220 or WO 2016/143872. Similar to regular single crystals, the crystalline sponges need to be handled with special care to avoid breakage.

The current method for structure elucidation with sc-XRD requires time consuming, elaborate and meticulous handling of the crystals, mostly to avoid breakage, loss or contamination. Furthermore, handling of crystals needs to be performed under a microscope and requires trained personnel as well as special equipment like sample holders and tools for micromanipulation. Many of the required steps can currently not be automatized for a number of reasons. The crystals are typically transparent and uncolored and thus feature low contrast, rendering camera assisted handling difficult as software detection of the crystal perimeter is impossible especially for small crystals. Furthermore, the crystals have to be retrieved from a container like a crystallization vial, adding an additional level of uneven optical background further hampering camera assisted handling.

Also, the current mounting methods may fail for a variety of reasons. In some cases, there is an incompatibility of reagents like the glue or the oil applied for mounting the crystalline sample onto the sample holder. Undesired movement of the crystalline sample during a measurement or during transport or mounting the sample holder to the goniometer may complicate the analysis of measured diffraction patterns. Furthermore, a high scattering background from sample holder in combination with small size of the crystalline sample also deteriorates the measurement results. In the specific case of the crystalline sponge technology, additional necessities also include the analyte soaking, where a manually selected crystalline sample has to be manually retrieved from a vial to be mounted on the diffractometer. Since several steps are required for structure elucidation (soaking, drying and evaporation of the solvent, several sample transfers or loading onto an X-ray sample holder, automation would be a great bonus especially for application of the crystalline sponge technology.

Thus, it is considered as an objective of the present invention to provide for a sample holder for performing X-ray analysis on a crystalline sample that facilitates the handling of the crystalline sample during preparation of a X-ray measurement as well as during performance of the X-ray measurement. The sample holder preferably provides for a secure mounting and positioning of the crystalline sample without significantly increasing the interference of the sample holder with the X-ray measurement.

### Summary of the invention

In accordance with the present invention, the sample holder comprises a holder base at the first end of the mounting support with means for mounting the holder base to the goniometer head, whereby the holder base is configured to fit into a well of a well plate. The means for mounting the holder base to the goniometer head may comprise a shape of the holder base that is adapted for and allows for securing the holder base on the goniometer head. For example, the holder base may exhibit notches or recesses that allow for a positive locking of the holder base onto the goniometer head. The holder base can also be adapted to be inserted into a clamping system that is arranged on the goniometer head. The holder base is further configured to allow for inserting the sample holder into a well of a well plate. The dimensions and the shape of the holder base as well as of the mounting support are adapted to the dimensions of the well in a manner that the sample holder can be inserted into the well by placing the mounting support inside of the well, thereby closing the opening of the well with the holder base. The holder base can be used as a lid that provides a closure of the well and protects the mounting support and a crystalline sample that is attached to the mounting support and placed inside of the well. A back side of the holder base is accessible from the outside of the well plate and can be used e.g. for automated handling systems that extract the sample holder from the well of the well plate and that subsequently transfer and attach the sample holder to a goniometer head.

In a preferred embodiment of the invention the holder base comprises a ferromagnetic material for mounting the holder base to a magnetic base element at or within the goniometer head. The ferromagnetic material can be a part or component made of ferromagnetic material that is arranged inside of the holder base or that is attached to the outside of the holder base. The holder base with the ferromagnetic material can snap to a magnet that is commonly used on a goniometer head, thus providing a defined position and secure fastening of the sample holder onto the goniometer head.

In another aspect of the present invention the mounting support comprises a tube into which the crystalline sample can be inserted. The tube can be made of glass or of a suitable polymer that does not cause significant scattering, thus reducing the interference with X-ray irradiation and a possible disturbance of the measurement results of the X-ray diffraction measurements. Furthermore, the wall thickness of the tube can be small, e.g. 0.02 mm or less. Nevertheless, the tube surrounds the crystalline sample that is inserted into the tube and provides for reliable positioning and mechanical protection of the crystalline sample when handling the sample or performing measurements with the sample.

In an advantageous manner the tube is made of a material that is solvent resistant to fluids that are commonly used for sample preparation and for attaching a crystalline sample to the mounting support. This prevents an undesired contamination or deterioration of the crystalline sample before or during a measurement.

In another aspect of the present invention the sample holder comprises a base disk that provides for a lid for a well of the well plate after insertion of the sample holder into the well. The diameter of the base disk can match the diameter of the opening of the well which allows for insertion of the base disk into the opening of the well resulting in secure closure of the well, thus protecting the mounting support with a crystalline sample attached thereto that are placed inside of the well. Such a base disk can be part of the holder base that is configured to be inserted into the well of the well plate. It is also possible to combine the holder base with a base disk that is larger than the opening of the well of the well plate and rests on top of the surface of the well plate when placing the mounting support inside of a well. Preferably, such a base disk has a slightly larger diameter than the diameter of the opening of the well. The surrounding border of the opening of the well provides for a circular seat for the base disk on the surface of the well plate.

According to an advantageous embodiment of the invention the holder base comprises a holder ring that is arranged at the first end of the mounting support and that surrounds the mounting support in a circumferential manner. The shape of the holder ring can match the shape of the cavity of the well in the well plate next to the opening of the well, thus allowing the holder ring to be inserted into the well and providing a fixed position of the holder ring next to the opening of the well. The mounting support that protrudes from the holder ring is then directed to the bottom of the well and securely placed inside of the well. The holder ring also provides for mechanical or magnetic features that allow for easy handling of the sample holder with a suitable automated handling system before or during a measurement.

In another aspect of the invention the base disk is removably attachable to the holder ring. While the holder ring can be inserted into the well of the well plate, the base disk can be configured to remain on top of the surface of the well plate and to provide for a tight closure of the well at the well opening. Furthermore, a bottom side of the base disk that is accessible from outside of the well can provide for interlocking means, clamping means or catching means that allow for easy handling of the sample holder with an automated handling system.

According to an embodiment of the invention a crystalline sponge is attached to the mounting support. A pre-assembled sample holder that comprises a crystalline sponge that is attached to the mounting support facilitates the preparation of individual crystalline samples. It is only required to add the analyte into the crystalline sponge which can easily be done by dipping the mounting support with the crystalline sponge into a solution that comprises the crystalline molecules to be analyzed.

According to another embodiment of the invention the crystalline sponge is arranged inside of the tube. The tube surrounds and protects the crystalline sponge arranged inside of the tube. A crystalline solution can be introduced into the tube, thus soaking the crystalline sponge and introducing the crystalline molecules into the porous sponge material. By closing the tube afterwards, the crystalline sample is preserved and allows repeated use and long periods of storage between subsequent measurements without any alteration or deterioration of the crystalline sample.

In another aspect of the invention the sample holder comprises a protective container that encases the mounting support and a crystalline sample that can be attached to the mounting support at a distance to the first end. The protective container can be removably connected with or fastened on the holder base. Preferably the protective container comprises a thread section and can be screwed onto the holder ring or onto the base disk of the sample holder. The protective container encompasses the mounting support and provides for mechanical protection of e.g. a glass tube with a crystalline sample attached therein. The protective container can be made of a suitable synthetic material. The protective container can be removed before performing a X-ray measurement, but can be attached to the holder base and protect the crystalline sample during storage and transport of the sample holder either within or outside of a well of the well plate.

The invention also relates to a sample holder handling system for performing X-ray analysis on crystalline samples with a goniometer with a goniometer head, with at least one sample holder and with a well plate, wherein the sample holder is configured according to one of the preceding claims and fits into a well of the well plate. A number of sample holders and a well plate can be used in experiments for structure elucidation by X-ray crystallography, where it will lead to a more convenient handling of crystalline samples. Each crystalline sample itself, i.e. a single crystal or a crystalline sponge, is better protected against environmental influences when stored into the corresponding well of the well plate. For the scientist, handling is also improved because with a better protection of the sample, less care is necessary in handling. Also, the sample holder can be attached to goniometer heads easily, especially when compared to current manual handling of sample holders.

Above that, a higher degree of automation is made possible. Crystalline samples can be automatically handled by automated handling systems as a predetermined and automated pick-up and return of the sample holder is possible.

In combination with a customized well plate or a holder ring that enables the usage of commercially available well plates, the degree of automation can further be increased. The well plate formats, typically comprising 24 or 96 wells, or in larger formats also 384 or 1536 wells, are standardized and compatible with a whole range of machines. Thus, they are commonly used for automation in fields such as sample processing, pipetting and measuring. With this invention, sample holders as defined above can now be processed automatically by said machines. Customization of the well plate configures the well plate to receive a number of sample holders within the respective wells, e.g. by adding an opening or bore at the bottom of each well within the well plate.

In another aspect of the invention the sample holder comprises a base disk with a diameter that matches the diameter of the well of the well plate. The base disk can comprise fastening means for engagement of the base disk with an automated sample holder operating system.

According to another embodiment of the present invention an insert ring is arranged at the bottom of a well of the well plate that supports the base disk of a sample holder that is inserted into the well of the well plate. By inserting the insert ring into the well, the upper end of the insert ring that is near the opening of the well serves as a stop for either the holder ring or the base disk of a sample holder that is placed within the well. The insert ring surrounds and encompasses the mounting support and a crystalline sample or crystalline sponge attached thereto, thus providing additional protection to the sample. The dimensions of the insert ring and in particular the height of the insert ring is configured to complement the height of a holder ring or a base disk in a manner that the combination of the sample holder and the insert ring inside of the well add to the full height of the well.

Furthermore, according to another aspect of the invention the holder base comprises a holder ring wherein the outer diameter and the lateral surface of the holder ring is adapted to match the diameter and the inner surface of a well of the well plate at the top and in close proximity to the opening of the well. In case of a conical well cavity, the holder ring has a matching cone-shaped outer surface that provides for a tight-fitting reception of the holder ring in the upper part of the well, preferably flush with the surface of the well plate.

According to an advantageous embodiment of the invention the holder ring comprises fastening means for engagement of the holder ring with an automated sample holder operating system.

In yet another aspect of the invention the sample holder comprises a protective container and wherein the outer diameter, the lateral surface and the height of the protective container is adapted to match the diameter, the inner surface and the height of a well of the well plate.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a three-dimensional sketch of a standardized well plate with 96 wells that are arranged in a regular pattern, whereby in some wells a sample holder according to the invention is inserted into the corresponding well,
Figure 2 illustrates an exploded and schematic view of a sample holder with a holder ring that is configured to be placed inside of a customized well of the well plate,
Figure 3 illustrates a schematic view of the sample holder with a well of Figure 2, whereby the sample holder with the holder ring is placed inside of the well,
Figure 4 illustrates an exploded and schematic view of another embodiment of the sample holder with a holder ring that is configured to be placed inside of a standardized well of the well plate,
Figure 5 illustrates a schematic view of the sample holder with a well of Figure 4, whereby the sample holder with the holder ring is placed inside of the well,
Figure 6 illustrates an exploded and schematic view of another embodiment of the sample holder with a base disk and a pin-like mounting support that is configured to be placed inside of a standardized well of the well plate,
Figure 7 illustrates a schematic view of the sample holder with a well of Figure 6, whereby the sample holder with the base disk is placed inside of the well,
Figure 8 illustrates an exploded and schematic view of another embodiment of the sample holder with a base disk, a pin-like mounting support and a surrounding tube that is configured to be placed inside of a standardized well of the well plate,
Figure 9 illustrates a schematic view of the sample holder with a well of Figure 8, whereby the sample holder with the pin-like mounting support and the surrounding tube is placed inside of the well.

### Detailed description of the invention

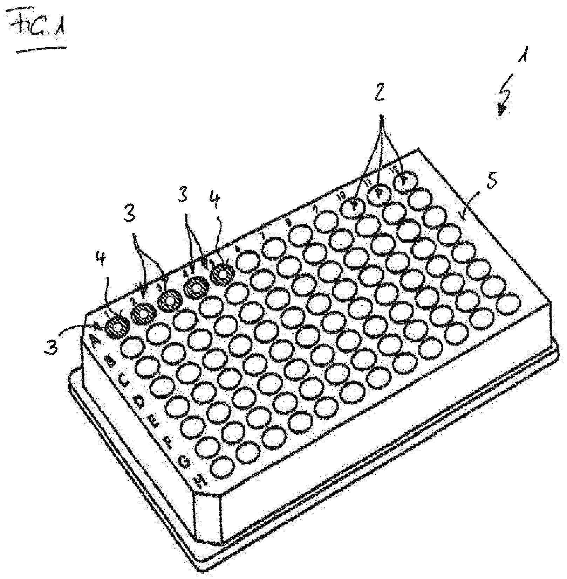

A well plate 1 with 96 wells 2 is shown in Figure 1. The wells 2 are arranged in a regular and matrix-like pattern on the well plate 1. The arrangement of the wells 2 corresponds with standards for such well plates 1 that can be used with many different machines and handling systems.

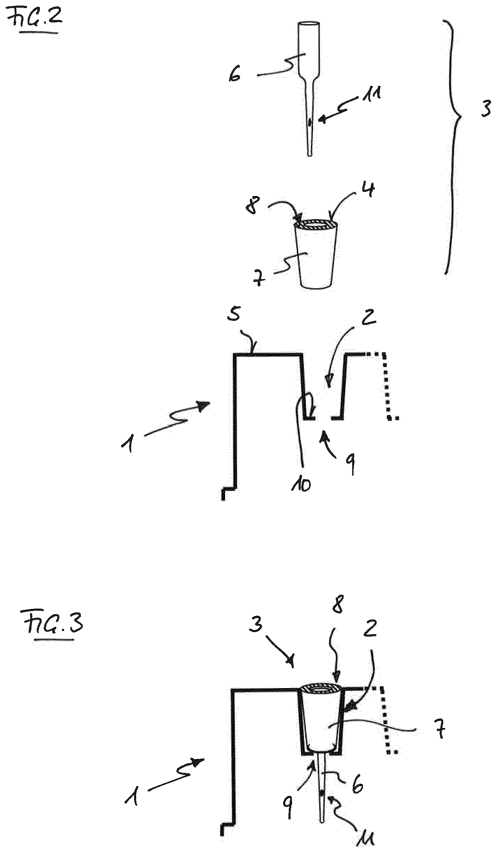

In some of the wells 2, namely in five of the wells 2 at positions A1 to A5 of the well plate 1 shown in Figure 1, a sample holder 3 according to the invention is placed inside of the well 2. Different embodiments of sample holders will be further described and are shown in Figures 2 to 9. A bottom side 4 of each of the sample holders 3 is flush with the upper surface 5 of the well plate 1. In Figure 1, only the bottom side 4 of each of the sample holders 3 can be seen.

In general, the well plate 1 should preferably confirm to the dimensions given by the American National Standards Institute (ANSI) for compatibility with pipetting robots or other automation devices. The current standard dimensions descriptions include ANSI/SLAS 1-2004 (Footprint Dimensions), ANSI/SLAS 3-2004 (Bottom Outside Flange Dimensions), ANSI/SLAS 4-2004 (Well Positions) and possibly ANSI/SLAS 2-2004 (Height Dimensions), possibly ANSI/SLAS 6-2012 (Well Bottom Elevation). The standard dimensions of well plates 1 are length of 127.76 mm and width of 85.48 mm. The well plate 1 should further be adjusted to applicable future standardizations for well plates 1.

A first embodiment of a sample holder 3 according to the invention is shown in Figures 2 and 3. In these Figures as well as in further similar Figures, a cross-section through the well plate 1 from the left edge of the well plate 1 is shown. However, only the first well 2 is indicated, while half of the second well 2 is only simulated with a dashed line. The sample holder 3 comprises a glass tube 6 wherein the glass tube 6 can be similar to a capillary that is commonly used in X-ray structure elucidation today, e.g. a model produced by Hilgenberg (Malsfeld, Germany) with a wall thickness of 0.01 mm, a funnel like opening on one side and a closed off end on the other (Article no. 4007630). The glass tube 6 has a thin wall thickness on the bottom to enable direct measurements of samples inside the glass tube in an X-ray diffractometer. Furthermore, the length of the glass tube 6 is configured to fit into the height of the well plate 1, which is for instance 14 mm, 22 mm or 44 mm and, at the same time, is configured to fit into the goniometer set up, i.e. on top of a goniometer head that is not shown in the Figures. The dimension range that is compatible with the currently commercially available goniometer heads allows a total length of the glass tube 6 of approx. 22 mm to 32 mm. By using the sample holder 3 with other goniometer heads and/or goniometer set ups, the dimensions of the glass tube 6 could be extended, e.g. from 10 mm to 50 mm, 100 mm, or even 250 mm.

The glass tube 6 of the sample holder 3 is surrounded by a holder ring 7. The holder ring 7 further comprises features that make it suitable to be directly attached to a goniometer in an X-ray diffractometer as mentioned above. These features can comprise a metal ring 8 which magnetically can be held by a goniometer head with a magnet inside of or on top of the goniometer head. The dimensions of the holder ring 7 are preferably compatible with the currently used base magnetic attachments to goniometer heads, e.g. the commercially available magnetic base support "Magnetic Base Support Z with Strong Magnet" from Rigaku (Art. Nr. 1013161) that can be used with a goniometer head from Rigaku (Art. Nr. 1013156). Other features for an attachment to the goniometer head could include a screw thread, a certain diameter in combination with a material that is pressure-insensitive for interlocking with or clamping on the goniometer head.

The dimensions of the holder ring 7 could also be different, which would then just require some changes on the goniometer head to be able to attach them. These changes can comprise a small adapter to the current design.

Preferably, the shape of the holder ring 7 is round, i.e. a circular shape. However, the holder ring 7 also can be of any other shape, e.g. with a square footprint. The shape of the holder ring 7 preferably fits into the well 2 of the well plate 1 and does not sink too far into the well 2 but is held back at the top, i.e. in close proximity to the opening of the well 2 at the surface 5 of the well plate 1. As can be seen in Figures 2 and 3, the well 2 of the well plate 1 is customized for reception of the sample holder 3 by adding an opening 9 into a bottom 10 of each of the wells 2, thus enabling the glass tube 6 to reach through the opening 9 into the body of the well plate 1.

The holder ring 7 can be permanently attached to the glass tube 6 to ensure best stability. The holder ring 7 can also be removably attached to the glass tube 6 in order to allow for recycling by replacing the glass tube 6. However, it is regarded as a basic requirement that the holder ring 7 does not detach from the glass tube 6 during a measurement.

Preferably, the holder ring 7 has a circular cross-section and a conical outer shape. The holder ring 7 is made from a polymer that can be glued to the glass tube 6. Preferably, a metal ring 8 is attached to the polymer base of the holder ring 7 as the feature for attachment to the goniometer head. However, a direct attachment of the feature for attachment to the goniometer head to the glass tube 6 is also possible. In one embodiment, a metal ring 8 can be attached directly to the glass tube 6.

The crystalline sample 11 is placed inside of the glass tube 6. The crystalline sample 11 can be a single crystal to be used for X-ray diffraction measurements. The crystalline sample 11 can also be composed of a crystalline sponge that is soaked with a crystalline solution comprising crystal molecules.

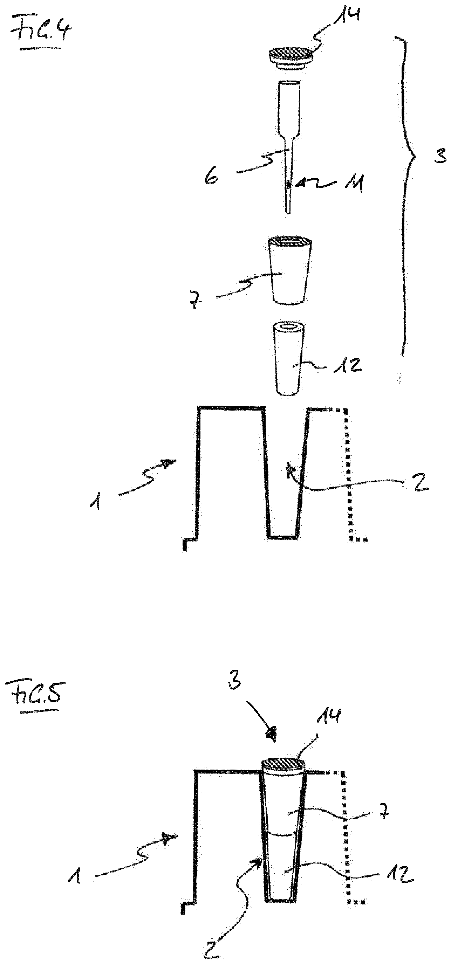

In Figures 4 and 5 the combination of another embodiment of the sample holder 3 with a standardized well plate 1 is shown. An insert ring 12 is inserted into the well 2 and placed on the bottom 10 of the well 2. An upper side 13 of the insert ring 12 provides for a stop that supports the holder ring 7 of the sample holder 3. The length of the insert ring 12 is configured to fully encompass the glass tube 6 that serves as a mounting support for the crystalline sample 11 inside of the glass tube 6.

A base disk 14 is attached to the holder ring 7 and provides for a closure of the glass tube 6, thus protecting the content of the glass tube 6, i.e. the crystalline sample 11 inside of the glass tube 6. The dimensions and the shape of the sample holder 3 with the base disk 14 can be configured to be fully placed inside of the well 2, a back side of the base disk 14 being flush with the surface 5 of the well plate 1. However, it is also possible and can be advantageous to have the base disk 14 outside of the well 2 which may allow for easy handling of the sample holder 3 with automated sample holder operating and handling systems.

Preferably, the base disk 14 closes the glass tube 6 tightly and guarantees the retention of any material such as organic solvents in the glass tube 6. The feature for attachment of the glass tube 6 to the goniometer head such as a magnetic material, i.e. the metal ring 8 can also sit on top of said base disk 14. The base disk 14 can also comprise a thread or a screw-in mechanism to guarantee a tight closing. The base disk 14 can also comprise a septum or a similar device that enables the transfer of material through the base disk 14 by puncturing it temporarily.

The sample holder 3 might be equipped with a feature for unique identification, such as a bar code, a two-dimensional bar code, QR code an RFID chip, or another characteristic of such kind, which can be captured and read by a machine.

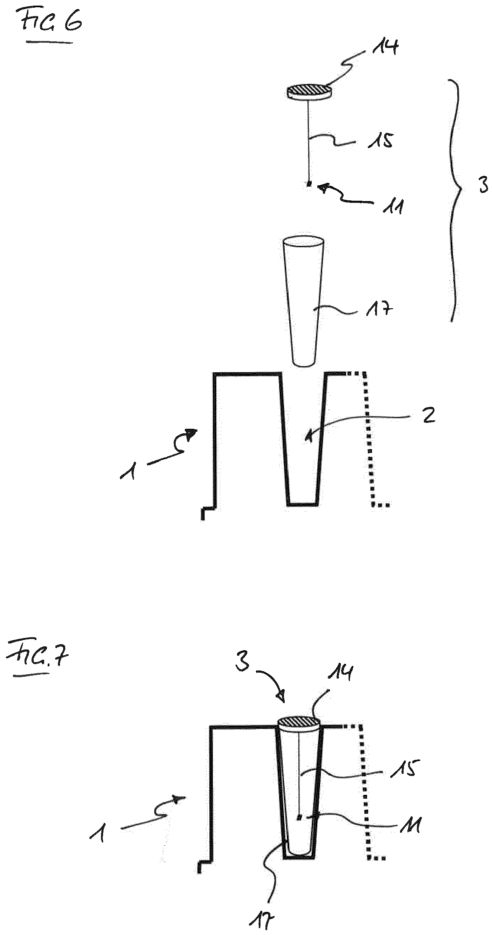

In Figures 6 and 7 the sample holder 3 comprises a pin-like pole 15 instead of the glass tube 6 of the previous embodiment that serves as the mounting support for the crystalline sample 11 that is attached to a free end 16 of the pin-like pole 15. The pin-like pole 15 is mounted onto the base disk 14. A protective container 17 that surrounds and encompasses the pole 15 is removably attached to the base disk 14. The dimensions and the shape of the protective container 17 are configured to be fully placed inside of the well 2 of the well plate 1.

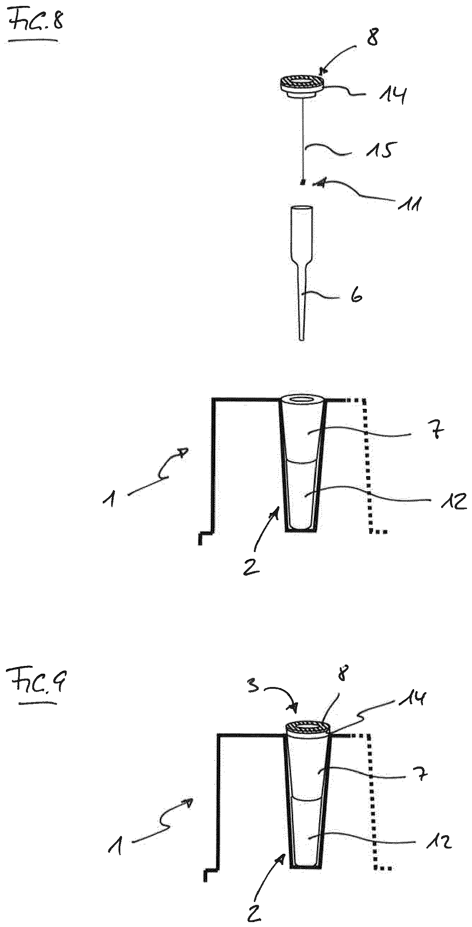

In Figures 8 and 9 yet another embodiment of the invention is shown. The sample holder 3 comprises both, a pin-like pole 15 and a glass tube 6 that surrounds and encompasses the pin-like pole 15 with the crystalline sample 11 attached to the free end 16 of the pin-like pole 15. The pin-like pole 15 and the glass tube 6 are attached to the base disk 14 that also comprises a metal ring 8 embedded into the base disk 14.

### Example

Hereinafter, the present invention is described in more detail and specifically with reference to the example, which however is not intended to limit the present invention.

For the proof of concept, a prototype of a sample holder 3 with a glass tube 6 was produced. It comprised a glass tube 6 made from borosilica glass with a diameter of 0.3 mm and a wall thickness of 0.01 mm. Such a glass tube 6 is commercially available e.g. as a capillary with a length of several centimeters. The glass tube 6 was melted shut with a flame at a distance of approx. 22 mm measured from an open end of the glass tube 6.

The glass tube 6 was glued into a holder ring 7 that comprised of a short plastic pipe with a length of approx. 9 mm, an outer diameter of 4 mm and an inner diameter of 3 mm. A previously closed end of the glass tube 6 is hidden within the holder ring 7, while the open end of the glass tube 6 pointed out. On top of the holder ring 7, i.e. on the side of the holder ring 7 where the open end 18 of the glass tube was not pointing out, a small metal ring 8 was glued. The metal ring 8 was a shim normally used as a distance plate for screws with an inner diameter of 3.2 mm and an outer diameter of 7 mm.

For a test during an application, a crystalline sponge, prepared as stated in a publication (M. Hoshino, A. Khutia, H. -Z. Xing, Y. Inokuma, M. Fujita, IUCrJ, 2016, 3, 139-151), was loaded into the glass tube 6 under a microscope. The sample holder 3 with the loaded glass tube 6 was then magnetically attached to the magnetic goniometer head. The diffraction pattern of the crystalline sample 11 within the crystalline sponge was successfully recorded at a temperature of 200 K and the structure could successfully be solved using standard protocols.

A well plate 1 with a customized design was created according to the following requirements. It comprised the base dimensions of well plates as defined by ANSI. The height was 34 mm. The wells 2 themselves were round had a diameter of approx. 9 mm. The wells 2 submerged into the well plate 1 for about 9 mm in a cylinder like shape. At the bottom 10 of the wells 2, there was a cutout in the middle with a diameter of approx. 2 mm.

When a sample holder 3 with a glass tube 6 as described above was placed in the prototype of the customized well plate 1, the tip of the glass tube 6 could fit through the cutout hole in the middle of the well 2. The sample holder 3 rested with the holder ring 7 on the bottom 10 of the well 2 of the customized well plate 1.

It was demonstrated that a magnet could be used to take the sample holder 3 out of the well plate 1 or to insert the sample holder 3 into the well 2 for storing and transporting the sample holder 3 before, between and after measurements.

## Claims

1. A sample holder (3) for performing X-ray analysis on a crystalline sample (11), whereby the sample holder (3) comprises a mounting support with a first end that can be attached to a goniometer head, whereby the crystalline sample (11) can be attached to the mounting support at a distance to the first end, **characterized in that** the sample holder (3) comprises a holder base at the first end of the mounting support with means for mounting the holder base to the goniometer head, and whereby the holder base is configured to fit into a well (2) of a well plate (1).

2. The sample holder (3) of claim 1, wherein the holder base comprises a ferromagnetic material for mounting the holder base to a magnetic base element at or within the goniometer head.

3. The sample holder (3) of claim 1, wherein the mounting support comprises a tube into which the crystalline sample (11) can be inserted.

4. The sample holder (3) of claim 3, wherein the tube is a glass tube (6).

5. The sample holder (3) of claim 1, wherein the sample holder (3) comprises a base disk (14) that provides for a lid for a well (2) of the well plate (1) after insertion of the sample holder (3) into the well (2).

6. The sample holder (3) of claim 1, wherein the holder base comprises a holder ring (7) that is arranged at the first end of the mounting support and that surrounds the mounting support in a circumferential manner.

7. The sample holder (3) of claim 5 and claim 6, wherein the base disk (14) is removably attachable to the holder ring (7).

8. The sample holder (3) of claim 1, wherein a crystalline sponge is attached to the mounting support.

9. The sample holder (3) of claim 3 and claim 8, wherein the crystalline sponge is arranged inside of the tube.

10. The sample holder (3) of claim 1, wherein the sample holder (3) comprises a protective container (17) that encases the mounting support and a crystalline sample (11) that can be attached to the mounting support at a distance to the first end.

11. A sample holder handling system for performing X-ray analysis on crystalline samples (11) with a goniometer with a goniometer head, with at least one sample holder (3) and with a well plate (1), wherein the sample holder (3) is configured according to one of the preceding claims and fits into a well (2) of the well plate (1).

12. The sample holder handling system of claim 11, wherein the sample holder (3) comprises a base disk (14) with a diameter that matches the diameter of the well (2) of the well plate (1).

13. The sample holder handling system of claim 12, wherein the base disk (14) comprises fastening means for engagement of the base disk (14) with an automated sample holder operating system.

14. The sample holder handling system of claim 12, wherein an insert ring (14) is arranged at the bottom (10) of a well (2) of the well plate (1) that supports the base disk (14) of a sample holder (3) that is inserted into the well (2) of the well plate (1).

15. The sample holder handling system of claim 11, wherein the holder base comprises a holder ring (7) and wherein the outer diameter and the lateral surface of the holder ring (7) is adapted to match the diameter and the inner surface of a well (2) of the well plate (1) at the top of the well (2) .

16. The sample holder handling system of claim 15, wherein the holder ring (7) comprises fastening means for engagement of the holder ring (7) with an automated sample holder operating system.

17. The sample holder handling system of claim 15, wherein an insert ring (14) is arranged at the bottom (10) of a well (2) of the well plate (1) that supports the holder ring (7) of a sample holder (3) that is inserted into the well (2) of the well plate (1).

18. The sample holder handling system of claim 11, wherein the sample holder (3) comprises a protective container (17) and wherein the outer diameter, the lateral surface and the height of the protective container (17) is adapted to match the diameter, the inner surface and the height of a well (2) of the well plate (1).
